# EUROPÄISCHE PATENTSCHRIFT

(11) **EP 1 566 560 B1**
(45) Veröffentlichungstag und Bekanntmachung des Hinweises auf die Patenterteilung: **24.10.2007**
(21) Anmeldenummer: 05002222.7
(22) Anmeldetag: 03.02.2005
(51) Int. Cl.: F16D 48/06

(54) **Verfahren zum Durchführen einer Tastpunktadaption an zumindest einer Kupplung eines automatisierten Getriebes und Einrichtung, insbesondere zum Durchführen des Verfahrens**
Touch point adaptation process for at least a clutch of an automatic transmission and device, in particular to carry out the process
Procédé pour régler le point d'activation d'au moins un embrayage d'une boîte de vitesses automatisée et appareil, en particulier pour la réalisation du procédé

(30) Priorität: 18.02.2004 DE 102004007807
(43) Veröffentlichungstag der Anmeldung: 24.08.2005
(73) Patentinhaber: LuK Lamellen und Kupplungsbau Beteiligungs KG, 77815 Bühl (DE)
(72) Erfinder: Roberts, Ben, 44667 Orrville Ohio (US)

(56) Entgegenhaltungen:
- FR-A- 2 825 434
- US-A- 5 871 419
- US-B1- 6 422 367

## Beschreibung

Die vorliegende Erfindung betrifft ein Verfahren zum Durchführen einer Tastpunktadaption an zumindest einer Kupplung eines automatisierten Getriebes in einem Antriebsstrang eines Fahrzeuges. Ferner betrifft die Erfindung eine Einrichtung zum Ansteuern eines automatisierten Getriebes mit zumindest einer Kupplung, wobei eine Tastpunktadaption durchführbar ist, zum Durchführen des Verfahrens.

In der Druckschrift US 5,871,419 A wird ein Verfahren offenbart, welches bei stehendem - mit einer Kupplung und einem automatisierten Getriebe ausgestatteten - Fahrzeug mit eingelegtem Gang und laufendem Motor - das sich beispielsweise beim Ampelstopp ergibt - den softwareseitig verwendeten Tastpunkt an den tatsächlichen physikalischen Tastpunkt der Kupplung adaptiert. Der Grundgedanke besteht darin, die Kupplung bei laufendem Motor und eingelegtem Gang so weit zu schließen, bis an der Reaktion des Motors der Aufbau eines Kupplungsmoments erkennbar wird. Über die Motorreaktion sollen dann Rückschlüsse auf den aktuellen Tastpunkt gezogen werden. Als mögliche Kontrollsignale kommen prinzipiell alle diejenigen Messsignale in Frage, die auf eine Änderung des Lastzustandes des Motors reagieren.

Aus der Druckschrift FR 2 825 434 A ist ein Verfahren zum Einstellen des Tastpunkts einer von einem Kupplungsaktor betätigten Kupplung bekannt. Dabei wird der Kupplungsaktor von einer elektronischen Steuereinrichtung derart gesteuert, dass ein von einem Motor über die Kupplung in einen Antriebsstrang übertragenes Moment einem vorbestimmten Greifmoment entspricht. Es werden Betriebsparameter des Motors erfasst, aus denen das gesamte Motormoment bestimmt wird. Der Betrieb von vom Motor angetriebenen Nebenaggregaten wird zur Ermittlung des Nebenaggregateantriebsmoments erfasst. Das von der Kupplung übertragene Kupplungsmoment wird gebildet, indem das Nebenaggregatemoment von dem Motormoment subtrahiert wird. Der Kupplungsaktor wird derart gesteuert, dass eine Abweichung zwischen dem Kupplungsmoment und dem Greifmoment abnimmt.

Aus der Druckschrift 102 28 709 A1 ist ein Verfahren zum Adaptieren der Einstellung einer Kupplung in einem unkonventionellen Antriebsstrang eines Fahrzeuges bekannt. Danach kann die Tastpunktadaption in konventioneller Weise nur dann durchgeführt werden, wenn der Verbrennungsmotor auch bei stehendem Fahrzeug im Leerlauf, also bei nichteingelegtem Gang, läuft. Das bekannte Verfahren kann vorsehen, dass eine Tastpunktadaption durchgeführt wird, während das Fahrzeug bei konstanter Geschwindigkeit kriecht, die Kupplung schleift und zudem der Leerlaufregler des Verbrennungsmotors aktiv ist.

Es hat sich gezeigt, dass bei dem bekannten Verfahren zum Durchführen einer Tastpunktadaption abgewartet werden muss, bis das Kupplungsmoment auf den Wert Null zurückgeführt wird, um die Tastpunktadaption zu beginnen. Dies bedeutet jedoch auch, dass die Adaption erst durchgeführt werden kann, wenn das Fahrzeug für eine längere Zeit stillsteht. Somit sind die Situationen begrenzt, in denen eine Tastpunktadaption nach bekannter Weise vollständig ausgeführt werden kann.

Der vorliegenden Erfindung liegt die Aufgabe zugrunde, ein Verfahren und eine Einrichtung der eingangs genannten Gattungen vorzuschlagen, welche das Durchführen einer Tastpunktadaption derart verbessern, dass sie häufiger beim normalen Fahrzeugbetrieb durchgeführt werden kann, und zudem die Zeit zum Durchführen der Tastpunktadaption verkürzt wird.

Diese Aufgabe wird verfahrensmäßig durch die Merkmale des Patentanspruches 1 und einrichtungsmäßig durch die Merkmale des Patentanspruches 6 gelöst.

Weitere vorteilhafte Ausgestaltungen ergeben sich insbesondere aus den jeweiligen Unteransprüchen.

Demnach wird ein Verfahren zum Durchführen einer Tastpunktadaption an zumindest einer Kupplung eines automatisierten Getriebes in einem Antriebsstrang eines Fahrzeuges vorgeschlagen, bei dem bei aktivierter Kriechfunktion und betätigter Bremse während eines Stillstandes des Fahrzeuges bei eingelegtem Gang eine Tastpunktadaption durchgeführt wird.

Auf diese Weise kann die Tastpunktadaption mit Hilfe des erfindungsgemäßen Verfahrens häufiger durchgeführt werden, da einerseits insgesamt die Zeit zum Durchführen der Tastpunktadaption verkürzt wird, weil bei dem vorgeschlagenen Verfahren nicht abgewartet werden muss, bis das Kupplungsmoment den Wert Null erreicht hat. Vielmehr kann das erfindungsgemäße Verfahren schon bei höheren Werten des Kupplungsmomentes gestartet werden, um den Tastpunkt zu bestimmen bzw. zu adaptieren.

Im Rahmen einer zweckmäßigen Weiterbildung der Erfindung kann vorgesehen sein, dass bei einem stillstehenden Fahrzeug mit aktivierter Kriechfunktion und betätigter Bremse sowie eingelegtem Gang das fallende Kupplungsmoment auf einem bestimmten Niveau für ein vorbestimmtes Zeitintervall konstant gehalten wird und es nicht notwendig ist abzuwarten, bis das Kupplungsmoment den Wert Null erreicht, und danach das von dem Antriebsmotor übertragene Motormoment während des vorbestimmten Zeitintervalls zu messen. Nach dem Öffnen der Kupplung kann das Motormoment bei geöffneter Kupplung nochmals gemessen werden, wobei die gemessenen Werte mit hinterlegten Werten aus der Kupplungskennlinie verglichen und der Tastpunkt gegebenenfalls adaptiert wird.

Eine vorteilhafte Ausgestaltung der vorliegenden Erfindung kann vorgesehen sein, dass aus den Messwerten des Motormoments ein Differenzwert gebildet und mit dem Differenzwert der hinterlegten Momenten verglichen wird, sodass der Tastpunkt bei einer vorbestimmten Abweichung der Differenzwerte entsprechend adaptiert wird. Bei einer Abweichung kann dann eine entsprechende Adaption bzw. eine Verstellung des Tastpunktes bei der Kupplung durchgeführt werden.

Die Abweichung kann durch einen vorgegebenen Grenzwert definiert werden. Beispielsweise kann bei einer geringeren Abweichung, welche unterhalb eines festzulegenden Grenzwertes liegt, keine Verstellung des Tastpunktes durchgeführt werden. Dagegen kann der Tastpunkt bei einer über dem Grenzwert liegenden Abweichung nachgestellt werden.

Das bei dem erfindungsgemäßen Verfahren verwendete Niveau des Kupplungsmomentes, welches für ein vorbestimmtes Zeitintervall konstant gehalten wird, kann in Abhängigkeit des Fahrzeuges gewählt werden.

Vorzugsweise kann bei der erfindungsgemäßen Strategie eine Tastpunktadaption während einer Kriechsituation, wenn die Bremse betätigt wird und das Kupplungsmoment sich verringert, so lange bei betätigter Bremse durchgeführt werden, bis das Kupplungsmoment den Wert Null erreicht hat. Während dieser Zeit wird ein Moment auf den Antriebsstrang übertragen. Die Tastpunktadaption hält das Kupplungsmoment bei einem vorbestimmten Wert konstant. Während dieser konstanten Kupplungsmomentenphase kann das Motormoment gemessen werden. Vorzugsweise kann dann das Kupplungsmoment auf den Wert Null reduziert werden, z.B. durch Öffnen der Kupplung oder dergleichen. Sobald der Wert erreicht ist, kann das Motormoment wieder ausgewertet bzw. gemessen werden. Um die Tastpunktadaption zu beenden, wird dann die Differenz der gemessenen Motormomente mit den erwarteten, aus der Kupplungskennlinie bekannten Motormomenten, verglichen und bei entsprechender Abweichung kann der Tastpunkt verändert werden.

Bei der Tastpunktadaption kann zum Klassifizieren einer Abweichung ein Grenzwert oder dergleichen vorgegeben werden, so dass eine Veränderung des Tastpunktes nur bei Überschreiten eines Grenzwertes durchgeführt wird. Es sind jedoch auch andere Maßnahmen denkbar, um die ermittelte Abweichung zu qualifizieren, um nicht bei jeder geringen Abweichung eine Tastpunktverschiebung vorzunehmen.

Die der Erfindung zugrunde liegende Aufgabe wird auch durch eine Einrichtung zum Ansteuern eines automatisierten Getriebes mit zumindest einer Kupplung gelöst, wobei die Einrichtung vorzugsweise bei einer bestimmten Fahrsituation eine Tastpunktadaption durchführt. Diese Einrichtung kann insbesondere zum Durchführen des vorgeschlagenen Verfahrens eingesetzt werden. Ein anderer Einsatzbereich ist jedoch auch denkbar.

Die erfindungsgemäße Einrichtung zeichnet sich dadurch aus, dass bei aktivierter Kriechfunktion und aktivierter bzw. betätigter Bremse während eine Stillstandes des Fahrzeuges bei eingelegtem Gang eine Tastpunktadaption durchführbar ist, wobei das von der Kupplung übertragene Kupplungsmoment für ein vorbestimmtes Zeitintervall konstant gehalten ist.

Gemäß einer Weiterbildung der vorliegenden Erfindung kann vorgesehen sein, dass die Einrichtung Mittel aufweist, mit denen das Motormoment zu bestimmten Zeitpunkten gemessen wird, und aus diesen Werten eine Differenz gebildet wird, welche beispielsweise mit hinterlegten Werten verglichen wird. Wenn eine Abweichung erkannt wird, kann eine Greifpunktadaption, also eine Tastpunktverschiebung, realisiert werden. Die ermittelte Abweichung kann anhand von Grenzwerten geeignet definiert werden.

Nachfolgend wird die vorliegende Erfindung anhand der Zeichnungen näher erläutert. Es zeigen:
- Figur 1: ein Flussdiagramm mit möglichen Verfahrensschritten eines erfindungsgemäßen Verfahrens zum Durchführen einer Tastpunktadaption; und
- Figur 2: zwei Diagramme, wobei das obere Diagramm die Verläufe des Kupplungsmomentes und des Motormomentes und das untere Diagramm die Verläufe der Motordrehzahl und der Getriebeeingangswellendrehzahl über die Zeit darstellen.

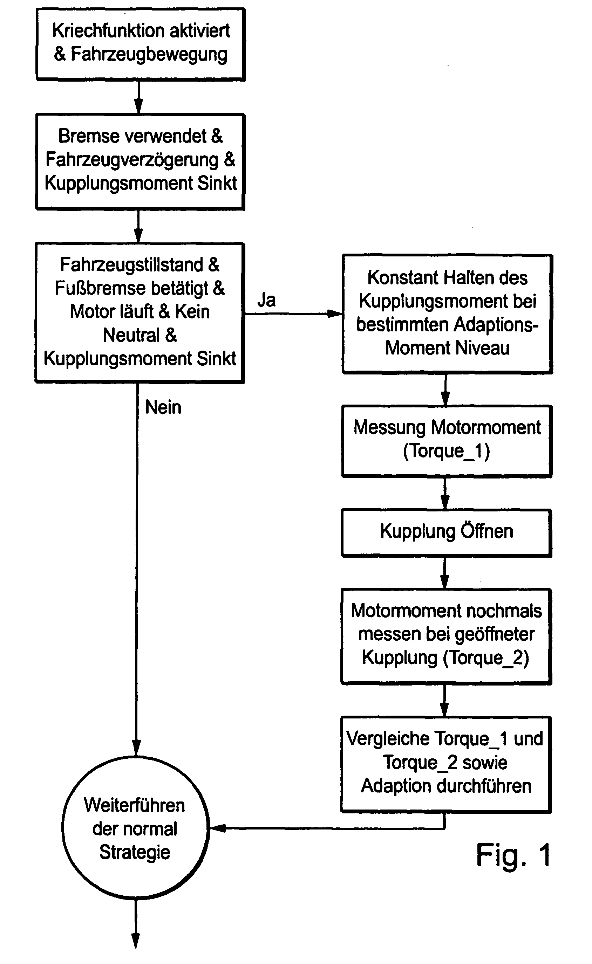

Gemäß Figur 1 wird eine mögliche Ausführungsform der erfindungsgemäßen Strategie zum Durchführen einer Tastpunktadaption bei einer Kupplung eines automatisierten Getriebes, wie z. B. einem ASG-, PSG- oder dergleichen Getriebesystem, gezeigt.

Das Flussdiagramm beginnt mit dem Fahrzeugzustand, in dem das Fahrzeug sich bewegt und die Kriechfunktion aktiviert ist. Danach folgt der Einsatz der Bremse zur Fahrzeugverzögerung, wodurch sich auch das Kupplungsmoment verringert.

Bei dem nächsten Schritt kann durch das erfindungsgemäße Verfahren geprüft werden, ob sich das Fahrzeug bei laufendem Motor und eingelegtem Gang im Stillstand befindet und die Fußbremse aktiviert ist. Wenn diese Bedingungen vorliegen, kann das anliegende Kupplungsmoment für einen vorbestimmten Zeitraum auf diesem Niveau gehalten werden.

Bei konstantem Kupplungsmoment wird eine Messung des Motormomentes durchgeführt. Danach kann die Kupplung geöffnet werden, so dass das Kupplungsmoment den Wert Null erreicht. Bei diesem Zustand wird das Motormoment abermals gemessen und durch einen Vergleich der beiden gemessenen Motormomente ergibt sich ein Differenzwert, welcher mit einem hinterlegten Wert, z.B. aus der Kupplungskennlinie, verglichen wird.

Ergibt sich dabei eine einen Grenzwert übersteigende Abweichung, kann der Tastpunkt der Kupplung entsprechend verändert bzw. eingestellt werden, so dass eine Adaption des Tastpunktes realisiert wird.

Nach erfolgter Adaption kann wieder in die normale Fahrstrategie zurückgekehrt werden.

Sollten die eingangs genannten Voraussetzungen nicht vorliegen, wird durch das erfindungsgemäße Verfahren bestimmt, dass keine Tastpunktadaption durchgeführt wird.

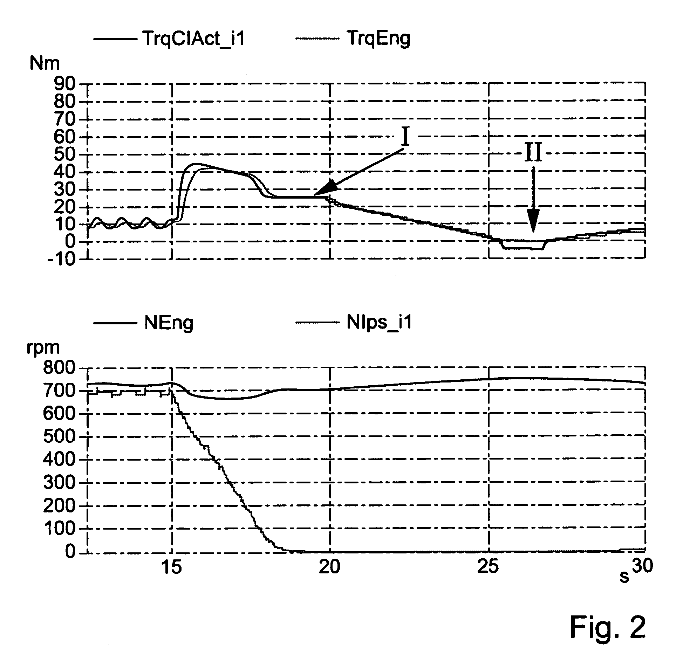

In Figur 2 sind zwei Diagramme dargestellt, wobei in dem oberen Diagramm das Kupplungsmoment TrqCIAct_i1 und das Motormoment TrqEng über die Zeit dargestellt sind. In dem unteren Diagramm sind die Drehzahlen des Motors NEng und der Getriebeeingangswelle Nlps_i1 über die Zeit dargestellt. Aus dem oberen Diagramm wird ersichtlich, dass das Motormoment TrqEng und das Kupplungsmoment TrqClAct_i1 bei aktivierter Kriechfunktion etwa bei 10 Nm liegen, wobei nach dem Betätigen der Bremse zum Zeitpunkt 15 s ein starker Anstieg auf etwa 40 Nm der beiden Momente erfolgt, und die Drehzahl der Getriebeeingangswelle Nlps_i1 stark abfällt, während die Motordrehzahl lediglich leicht reduziert wird.

Durch den Pfeil I in dem oberen Diagramm wird das Zeitintervall mit konstantem Kupplungsmoment markiert, in dem das Motormoment gemessen wird. Mit Pfeil II wird der Zeitpunkt markiert, bei dem nach geöffneter Kupplung das Motormoment nochmals gemessen wird. Der ermittelte Differenzwert der beiden gemessenen Werte des Motormoments wird dann mit einem hinterlegten Wert verglichen, um gegebenenfalls eine Tastpunktadaption an der Kupplung durchzuführen.

## Patentansprüche

1. Verfahren zum Durchführen einer Tastpunktadaption an zumindest einer Kupplung eines automatisierten Getriebes in einem Antriebsstrang eines Fahrzeuges, bei dem bei aktivierter Kriechfunktion und betätigter Bremse während eines Stillstandes des Fahrzeuges bei eingelegtem Gang eine Tastpunktadaption durchgeführt wird, **dadurch gekennzeichnet, dass** bei fallendem Kupplungsmoment das von der Kupplung übertragene Kupplungsmoment (TrqClAct_i1) für ein vorbestimmtes Zeitintervall konstant gehalten wird, dass das von dem Antriebsmotor übertragene Motormoment (TrqEng) während des vorbestimmten Zeitintervalls gemessen wird, und dass das Motormoment (TrqEng) bei geöffneter Kupplung wieder gemessen wird, wobei die gemessenen Werte mit hinterlegten Werten aus der Kupplungskennlinie verglichen und gegebenenfalls adaptiert werden.

2. Verfahren nach Anspruch 1, **dadurch gekennzeichnet, dass** aus den Messwerten des Motormoments (TrqEng) ein Differenzwert gebildet und mit dem Differenzwert der hinterlegten Momenten verglichen wird, sodass der Tastpunkt bei einer vorbestimmten Abweichung der Differenzwerte entsprechend adaptiert wird.

3. Verfahren nach Anspruch 2. **dadurch gekennzeichnet, dass** ein Grenzwert für die Abweichung definiert wird.

4. Verfahren nach einem der vorangehenden Ansprüche, **dadurch gekennzeichnet, dass** das Niveau des für ein vorbestimmtes Zeitintervall konstanten Kupplungsmoments (TrqClAct_i1) Fahrzeug abhängig ausgewählt wird.

5. Verfahren nach einem der vorangehenden Ansprüche, **dadurch gekennzeichnet, dass** bei stillstehendem Fahrzeug, bei betätigter Fußbremse, laufendem Antriebsmotor, bei eingelegtem Gang und fallendem Kupplungsmoment (TrqCIAct_i1) das Kupplungsmoment (TrqCIAct_i1) auf einem bestimmten Adaptionsmomentenniveau für das vorbestimmte Zeitintervall konstant gehalten wird und das Motormoment (TrqEng) gemessen wird, dass danach die Kupplung geöffnet wird, dass das Motormoment (TrqEng) bei geöffneter Kupplung wieder gemessen wird, dass ein Differenzwert aus den beiden Messwerten gebildet und mit einem hinterlegten Differenzwert verglichen werden kann, so dass der Tastpunkt der Kupplung bei einer Abweichung der Differenzwerte neu eingestellt und abgespeichert wird, und dass danach in den normalen Fahrmodus gewechselt wird.

6. Einrichtung zum Ansteuern eines automatisierten Getriebes mit zumindest einer Kupplung, wobei eine Tastpunktadaption durchführbar ist, zum Durchführen des Verfahrens nach einem der vorangehenden Ansprüche 1 bis 6, **dadurch gekennzeichnet, dass** die Einrichtung bei aktivierter Kriechfunktion und fallendem Kupplungsmoment und betätigter Bremse während eines Stillstandes des Fahrzeuges bei eingelegtem Gang eine Tastpunktadaption veranlasst, wobei Mittel vorgesehen sind, um das Kupplungsmoment (TrqClAct_i1) für ein vorbestimmtes Zeitintervall konstant zu halten und das Motormoment (TrqEng) während des vorbestimmten Zeitintervalls zu messen, und wobei das Motormoment (TrqEng) bei geöffneter Kupplung bestimmbar ist, und die gemessenen Werte mit hinterlegten Werten aus der Kupplungskennlinie vergleichbar sind und gegebenenfalls zum Adaptieren des Tastpunktes verwendbar sind.

## Claims

1. Method for performing a touch point adaptation on at least one clutch of an automated transmission in a drive train of a vehicle, wherein a touch point adaptation is performed with the creep function active and the brake operated while the vehicle is stationary with a gear engaged, **characterized in that** while the clutch torque is dropping the clutch torque transmitted by the clutch (TrqCIAct_i1) is kept constant for a predetermined time interval, that the engine torque transmitted by the drive engine (TrqEng) is measured during the predetermined time interval, and that the engine torque (TrqEng) is measured again with the clutch disengaged, the measured values being compared to stored values from the clutch characteristic and adapted if necessary.

2. Method according to Claim 1, **characterized in that** a differential value is derived from the measured values of the engine torque (TrqEng) and is compared with the differential value of the stored torques, so that the touch point is appropriately adapted when a predetermined deviation of the differential values occurs.

3. Method according to Claim 2, **characterized in that** a limiting value for the deviation is defined.

4. Method according to one of the preceding claims, **characterized in that** the level of the clutch torque (TrqCIAct_i1) that is constant for a predetermined time interval is selected depending on the vehicle.

5. Method according to one of the preceding claims, **characterized in that** with the vehicle stationary, with the foot brake engaged, drive engine running, with a gear engaged and the clutch torque (TrqClAct_i1) dropping, the clutch torque (TrqClAct_i1) is kept at a specific adaptation torque level for the predetermined time interval and the engine torque (TrqEng) is measured, that the clutch is then disengaged, that the engine torque (TrqEng) is measured again with the clutch disengaged, that a differential value is derived from the two measured values and can be compared with a stored differential value, so that a new touch point of the clutch is set and saved when there is a deviation in the differential values, and that the system is then switched to normal driving mode.

6. Device for actuating an automated transmission having at least one clutch, with a touch point adaptation being performable, for performing the method according to one of the preceding Claims 1 through 5, **characterized in that** with the creep function active and the torque moment dropping and the brake operated the device initiates a touch point adaptation while the vehicle is stationary with a gear engaged, there being means provided to keep the clutch torque (TrqCIAct_i1) constant for a predetermined time interval and to measure the engine torque (TrqEng) during the predetermined time interval, and with the engine torque (TrqEng) being determinable with the clutch disengaged and the measured values being comparable with stored values from the clutch characteristic and usable as needed for adapting the touch point.

## Revendications

1. Procédé pour régler le point d'activation sur au moins un embrayage d'une boîte de vitesses automatisée dans une branche d'entraînement d'un véhicule, dans lequel, avec la fonction de vitesse lente activée et le frein activé, on effectue un réglage du point d'activation pendant un arrêt du véhicule avec la vitesse enclenchée, **caractérisé en ce que**, avec le couple d'embrayage en chute, le couple d'embrayage (TrqClAct_i1) transmis par l'embrayage est maintenu constant pour un intervalle de temps prédéfini, **en ce que** le couple moteur (TrqEng) transmis par le moteur d'entraînement est mesuré pendant l'intervalle de temps prédéfini, et **en ce que** le couple moteur (TrqEng) est mesuré à nouveau avec l'embrayage ouvert, les valeurs mesurées étant comparées avec des valeurs déposées provenant de la courbe caractéristique d'embrayage et étant adaptées éventuellement.

2. Procédé selon la revendication 1, **caractérisé en ce qu'**une valeur de différence est formée à partir des valeurs mesurées du couple moteur (TrqEng) et comparée avec la valeur de différence des couples déposés, de sorte que le point d'activation est réglé de façon appropriée dans le cas d'un écart prédéfini des valeurs de différence.

3. Procédé selon la revendication 2, **caractérisé en ce qu'**une valeur limite est définie pour l'écart.

4. Procédé selon l'une quelconque des revendications précédentes, **caractérisé en ce que** le niveau du couple d'embrayage (TrqClAct_i1) constant pour un intervalle de temps prédéfini est choisi en fonction du véhicule.

5. Procédé selon l'une quelconque des revendications précédentes, **caractérisé en ce que**, avec le véhicule à l'arrêt, le frein à pied activé, le moteur d'entraînement en marche, une vitesse enclenchée et le couple d'embrayage (TrqClAct_i1) en chute, le couple d'embrayage (TrqClAct_I1) est maintenu constant à un niveau déterminé du couple d'adaptation pour l'intervalle de temps prédéfini et le couple moteur (TrqEng) est mesuré, **en ce que** l'embrayage est ouvert ensuite, **en ce que** le couple moteur (TrqEng) est mesuré à nouveau avec l'embrayage ouvert, **en ce qu'**une valeur de différence est formée à partir de deux valeurs mesurées et peut être comparée avec une valeur de différence déposée, de sorte que le point d'activation de l'embrayage est réglé à nouveau dans le cas d'un écart des valeurs de différence et stocké, et **en ce qu'**on passe ensuite au mode de conduite normal.

6. Dispositif pour activer une boîte de vitesses automatisée comprenant au moins un embrayage, un réglage du point d'activation pouvant être effectué pour mettre en oeuvre le procédé selon l'une quelconque des revendications 1 à 6 précédentes, **caractérisé en ce que** le dispositif ordonne un réglage du point d'activation avec la fonction de vitesse lente activée, un couple d'embrayage en chute et un frein activé pendant un arrêt du véhicule avec une vitesse enclenchée, des moyens étant prévus pour maintenir constant le couple d'embrayage (TrqClAct_i1) pour un intervalle de temps prédéfini et pour mesurer le couple moteur (TrqEng) pendant l'intervalle de temps prédéfini, et le couple moteur (TrqEng) pouvant être déterminé avec l'embrayage ouvert, et les valeurs mesurées pouvant être comparées avec des valeurs déposées provenant de la courbe caractéristique d'embrayage et pouvant être utilisées éventuellement pour le réglage du point d'activation.
